# EUROPEAN PATENT SPECIFICATION

(11) **EP 0 877 460 B1**
(45) Date of publication and mention of the grant of the patent: **01.02.2006**
(21) Application number: 98500102.3
(22) Date of filing: 28.04.1998
(51) Int. Cl.: H02G 5/06

(54) **Bar groupings device to tranport and distribute electricity**
Gruppierte Stromschienen für Transport und Verteilung von Elektrizität
Barres omnibus groupées pour le transport et la distribution d'électricité

(30) Priority: 29.04.1997 ES 9700920
(43) Date of publication of application: 11.11.1998
(73) Proprietor: CIAMA BUSBAR S.L., 08190 San Cugat del Valles (Barcelona) (ES)
(72) Inventor: Garcia-Maurino De Vigo, Luis, 01890 Sant Cugat Del Valles, Barcelona (ES)
(74) Representative: Gonzalez Vacas, Eleuterio

(56) References cited:
- GB-A- 1 357 875
- GB-A- 2 298 969
- US-A- 3 365 537
- US-A- 3 786 394
- US-A- 3 978 761
- US-A- 4 029 379
- US-A- 4 146 285
- US-A- 4 504 180
- US-A- 4 849 581
- US-A- 4 950 841
- US-A- 5 228 250
- US-A- 5 261 830

## Description

### OBJECTIVE OF THE INVENTION

The invention refers to a series of improvements in systems for the distribution of electricity and more specifically in those systems that consist of busbars that are grouped and under suitable pressure inside a conduit, which also includes the means for making branch connections.

The objective of the invention is to provide suitable, efficient means for obtaining suitable pressure and in consequence, a good union between the conducting busbars within the corresponding conduit, as well as obtaining a structure, based on profiles, that allow the height to be varied in accordance with the width of the conducting busbars themselves.

### BACKGROUND OF THE INVENTION

The Spanish patent of invention with publication number 2060517, describes a series of improvements in the systems of distribution, union and connection of the means of electrical conduction. The patent establishes methods of union between the conducting busbars, as well as a support for securing these within the corresponding conduit. This support is formed from two opposing pieces that are related through spacers that are suitable for the size of the busbars themselves. These two opposing pieces have housings for the edges of the busbars, which contain metallic parts in the form of clips that prevent any movement of the busbars in the mounting columns. This is in addition to elastic parts that prevent the transmission of any vibrations from the conducting busbars to the conduit.

This patent of invention also describes a system for making branch connections that is adjustable to the corresponding mounting conduit for the conducting busbars. This branch connection system consists of sliding flaps linked to springs that maintain them in the closed position. In turn, these sliding flaps are fitted with ramps that enable them to be moved when a branch connection is being made.

This patent of invention also describes the supporting pieces for the conducting busbars. These pieces are located at both ends of the conduit itself.

In any case, the improvements that are the objective of the said patent of invention 2060517 are designed to provide totally closed modules, which have the modular means of coaxial connection with other identical modules, in order to interconnect the conducting busbars. There are also elements for making branch connections along the length of the said modules, where the branch connections equally maintain the modular sealing.

Through the patent US-A-4029379, a screw provided with a calibrated nut is known to be used as a means of fixing the different conductor bars, permitting the degree of tightness applied thereto to be predetermined and, in consequence, the degree of pressure that the screw-nut unit exerts on the conductor bar group, and so that, with the aid of a washer, it can be directly checked if the nut has been tightened or not.

Nevertheless, in this patent, there are no means which permit the initial tightness situation to be kept intact, i.e. which enable one to detect if, after the initial tightening of the conductor bar bundle, a subsequent tightening or loosening has been performed, i.e. which avoids uncontrolled manipulations of said tightening unit.

Furthermore, in this US patent it is not feasible to house one or two conductors in parallel, in the same splice joint housing, meaning that the dimensions of said housing are pre-established beforehand and are invariable.

### DESCRIPTION OF THE INVENTION

The purpose of the improvements of the invention, applied to grouped busbars for the transport and distribution of electricity, is to obtain a structure for the assembly of the grouped busbars that is based on a minimum component count with maximum versatility and compatibility with other products or systems.

More specifically, one of the improvements of the invention consists of providing modular components that determine the system of union based on elements that provide the ideal pressure for producing the said pressure between the conducting busbars. These components or modular methods of union and pressure are based on the use of a pair of end plates, between which are installed the conducting busbars with the insertion of both insulating and conducting separating plates. This includes centring elements for the plates, which are mounted on a tubularguide arranged axially on a calibrated pressure vise, which has a tightening head and breakable neck at one end. This arrangement means that when the union is tightened and the optimum point of pressure is reached, then the said pressure vise will break at the referred neck, leaving the union tightened and ready for use.

This pressure and union system between the conducting busbars is completed with security means that prevent the re-tightening of the established union. This means that if it has to be dismounted, then a washer, which forms part of the said security means, must be removed, in which case the vise becomes accessible once more, but the security element is lost.

As an addition to the previously referred improvement, it should be mentioned that the insulating assemblies that centre both the conducting and insulating separating plates that are arranged on the guide established around the pressure vise with the object of insulating this, may be mounted in various quantities. This allows a greater or lesser degree of separation between the insulating plates and therefore allows one or two conducting busbars to be housed as well as their having variable thickness.

Another of the improvements consists in building the assembly based on profiles of a material that is a good thermal conductor. This is based on two types of profile, which in pairs form a tubular body to hold the busbars, and two conduits, an upper and a lower. The corresponding means for housing the ends or separated points of the conducting busbars are mounted in these conduits. They are fixed on the inside of the tubular body formed by the profiles. This tubular body is hermetically sealed by virtue of the union between the profiles, which is made with an airtight gasket in each case.

The four profiles, equal in pairs, which form the structure of the conducting busbar housing, possess a U-shaped configuration. Two of them are arranged so that they correspond to the upper and lower parts respectively, one oriented upwards and the other downwards. While between them are arranged the other two profiles configured in "C" and oriented outwards in opposing positions. The upper and lower branches of these second profiles form the support for the parallel, facing sides of the previously mentioned upper and lower profiles. The sealing gasket is used so that the tubular body formed by the profiles is airtight. The greater or lesser height of the tubular body depends on the greater or lesser length of the intermediate or lateral profiles and this allows the adaptation, in each case, to the height of the conducting busbars.

The conduit obtained by this method allows the possibility of making branch connections, on both sides, along its complete length, based on the branch connection flaps, which automatically open and close with the accessories fitted to the corresponding branch connection boxes. There are indentations in the conducting busbars that are fitted with suitable shaped pieces that form the corresponding branch connection assembly. These pieces fit into the branch connection flaps to allow the respective branch connection boxes to be located.

The branch connection flap cover is fitted with hinges so that it can be maintained open or make it independent by removing it once the branch connection has been made. The said flap possesses a fixed part that once closed can be locked or sealed so that the supplying companies are able to prevent uncontrolled connections to the electricity supply.

One of the improvements consists of the means for facilitating the assembly and fixing the branch connection box in place. This is based on stops, placed at suitable distances along the conduit, so that the branch connection boxes rest on these stops. At the same time they free the branch connection clips from the mechanical work of supporting the boxes themselves.

### DESCRIPTION OF THE DRAWINGS

In addition to the present description and with the object of providing a better understanding of the characteristics of the invention, in accordance with a preferential example of a practical case, a set of diagrams is provided as an integral part of the said description. This set of diagrams has a non-limiting, illustrative character and represents the following:
Figure 1. This shows the sectional details of the mounting of conducting busbars on the structure obtained from the corresponding profiles. It shows the separation of the points of the conducting busbars in the upper conduit of the structure.
Figure 2. This shows the details of several conducting busbars, specifically three, forming three phases, and two other busbars forming a double neutral. This figure shows the manner in which the separation the busbars themselves has been achieved.
Figure 3. This shows a half-section view of the appearance of the conducting busbars, based on the means or modular components that achieve the pressure and union of the corresponding busbars.

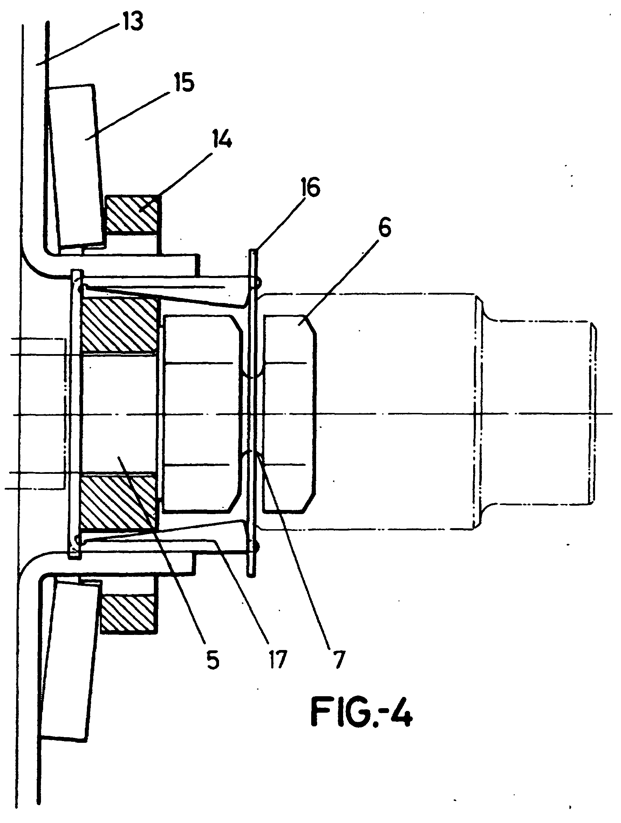

Figure 4. This shows the details of the end of the calibrated pressure vise and the security means that intervene in the tightening and union of the conducting busbars and prevent any re-tightening of the union once the optimum pressure point has been achieved.
Figure 5. This shows the details of a section of part of the assembly of the previous figure, with the three separating elements between the two insulating plates in order to allow the arrangement of a pair of conducting busbars.
Figure 6. This shows a transversal section of the structure obtained on the basis of the four profiles, equal in pairs, which determine the upper and lower conduits and the intermediate airtight housing for the conducting busbars themselves. This figure also contains detail on a greater scale where the sealing gasket can be seen arranged on the support between the intermediate profiles and the upper and lower end profiles.
Figure 7. This shows a longitudinal view of a conduit that has both upper and lower branch connections, with cover.
Figure 8. This shows details of an upper plan view of the flap that forms one of the branch connections shown in the previous figure.
Figure 9. This shows the detail of a section on greater scale of the flap itself, with the cover in the open position.
Figure 10. This shows the detail of the method that facilitates the assembly of the corresponding branch connection box in its working position above the corresponding conduit.
Figure 11. This shows, finally, a lateral detail of the means represented in the previous figure.

### THE PREFERRED EMBODIMENT OF THE INVENTION

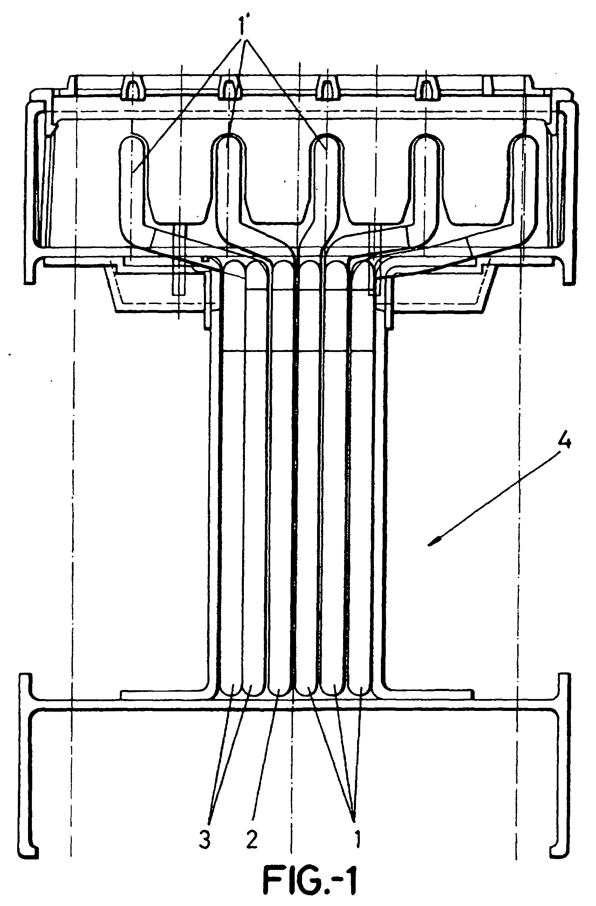

As is well-known, the distribution and transport of electrical energy is carried out via conducting busbars that are grouped together in a tubular body that forms the three phases and the neutral to earth. Thus, in figure 1 can be seen the conducting busbars (1) constituting a similar number of phases, the conducting busbar (2) that may be considered being the earth and the conducting busbars (3) forming a double neutral. These conducting busbars are grouped together in a sandwich inside a tubular, airtight body that will be explained later, referred to in general as (4). These form an upper and lower conduit, in which points (1') and (3') of the said conducting busbars are separated in order to obtain a union between the said busbars to achieve optimum performance of the union contact.

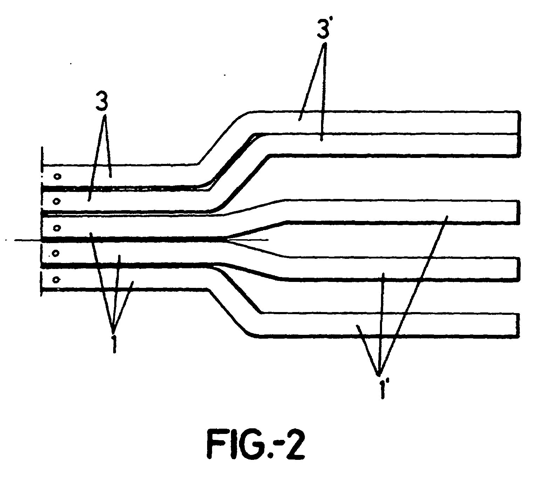

It is evident that in order to obtain different variations of the product on the market that the composition of the conducting busbars may be based on the grouping of three conducting busbars, the grouping of four conducting busbars, the grouping of five conducting busbars, and the grouping of six conducting busbars. In the last two cases, two conducting busbars may form a double neutral as shown in figure 1 and also in figure 2. These are designed for installations with large single-phase consumption that is taken from three-phase alternating current supplies. This is a solution that is becoming more and more frequent in large buildings and skyscrapers.

In all cases, the composition or grouping of the busbars may be done with a busbar width of 6 mm. As well as 8 mm. and with a variable height of 50, 75, 120 and 200 mm. Figure 2 shows precisely the separation of points (1') and (3') of the said conducting busbars which make up the three phases and the pair of conducting busbars that form a double neutral.

Therefore, starting from these conventional characteristics, one of the improvements of the invention consists of a method of connecting the conducting busbars by pressure in order to obtain a correct union both electrically as well as mechanically. This connection is based on a set of components that cause the pressure on the conducting busbars themselves, in combination with insulating and conducting elements or components.

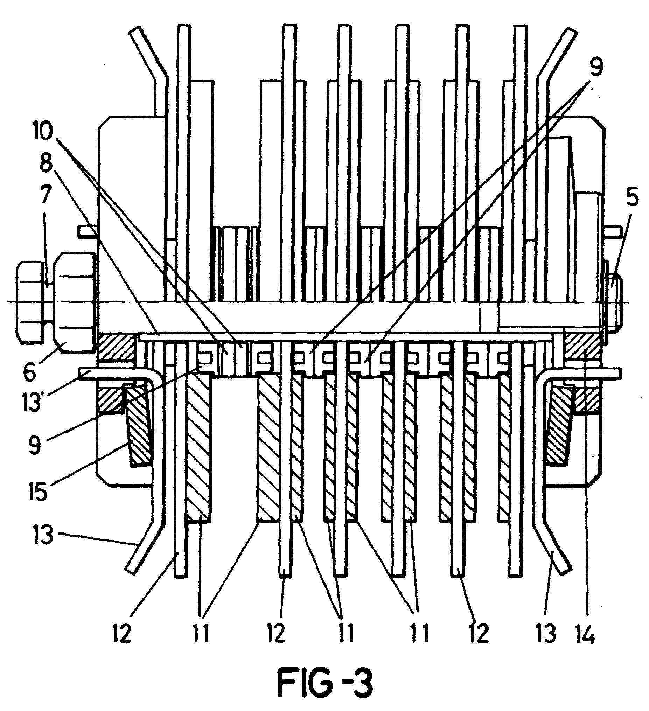

Thus, it can be seen in figure 3, how the arrangement is made on a calibrated, pressure vise (5) with a head (6) and a narrowed, breakable neck (7). There is an encircling, insulating bushing (8) on this vise, which also acts as a guide for a series of insulating pieces (9) and (10), arranged between pairs of conducting plates (11). These are complete with insulating plates (12), so that the conducting busbars are arranged between each pair of contiguous conducting plates (11). The thickness of the actual conducting busbar or busbars will depend on the their separation and they may be one or two in number.

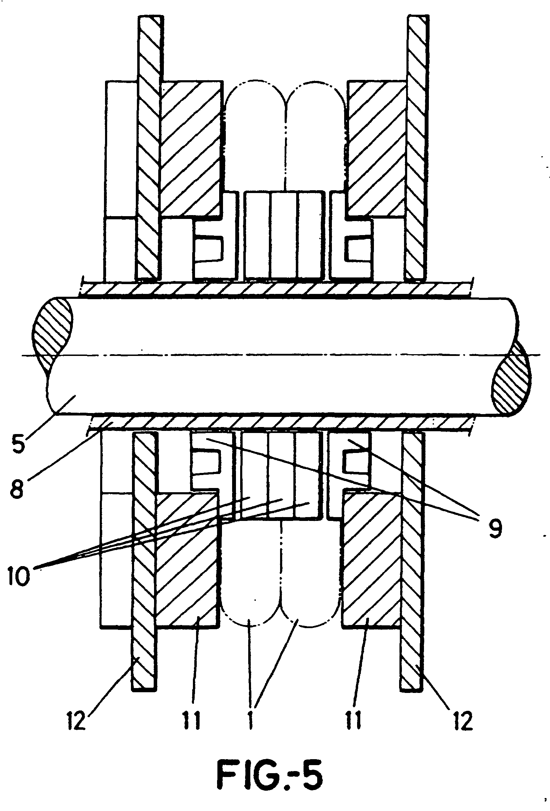

Thus, two conducting busbars (1) can be seen in figure 5, between the pair of conducting plates (11) that are interleaved with the insulating plates (12) referred to previously. This is all mounted on the calibrated pressure vise (5) with the insulating bushing (8) and the insulating, guide elements (9) and (10).

The pressure is obtained through a pair of end plates (13) that have an axial section (13') that passes via the corresponding nuts and pressure washers (14) mounted on the ends of the pressure vise (5). There is a Bellville anchoring washer (15) between these washers (14) and the plates (13). This means that the insulating assemblies (9) and (10) perform the centring of the plates (11) and (12) and provide a greater or lesser separation of these and therefore more or less height for introducing thicker or thinner conducting busbars or even two conducting busbars. One characteristic of this, is that these insulating elements or assemblies (9) and (10) are mounted on the centring guide bushing (8) that also insulates the pressure vise (5) from the other components.

This means that the insulating elements or assemblies (9) and (10), with their various compositions, allow the use of different numbers of conducting busbars and of different thickness, in accordance with the commercial needs of the product. One basic requirement is the conservation of the 6 and 8 mm thickness of the conducting busbars and their various multiples in order to obtain a harmonic composition of the electrical and mechanical results.

In order to obtain the necessary pressure in the conducting busbar arrangement in accordance with that previously stated, and to avoid any unnecessary or deficient operations, the assembly is completed with certain security measures. These security measures are such that when the optimum point of pressure is reached when tightening the referred union, the head (6) will break off the neck (7) of the pressure vise (5) leaving the union tight and ready for operation. The security means therefore consists of a washer (16) linked to the outer edge of an axial element (17) that is retained by the inside of the nut or washer (14) in such a way as to prevent the union from being re-tightened. This means that the said security washer (16) must be removed in order to dismount the union, in which case that pressure vise (5) is once again accessible and the security element (17) is lost.

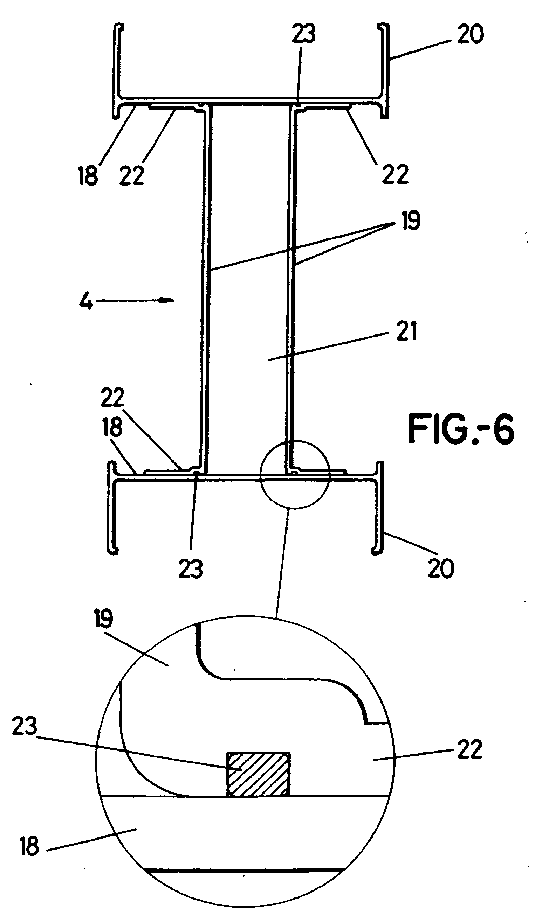

Another of the improvements of the invention consists of the structure shown in figure 6, which is based on two pairs of profiles (18) and (19). The first two define the upper and lower conduits (20) and the second two define a tubular part (21) together with the two previous ones, since, as has already been said, they have a "U" configuration. The upper is orientated upwards and the lower downwards, and between the intermediate branches of these two profiles (18) are interleaved the two profiles (19) with the "C" configuration with their lateral branches orientated outwards. These lateral branches (22) are fixed through the use of a sealing gasket (23), so that the tubular section (21) is completely airtight. The grouping or arrangement of the conducting busbars is mounted on top.

It is evident that the profiles (19) may be of various heights in order to adapt to the height of the conducting busbars. The separation between them may also vary in order to allow different possibilities of thickness combinations and the number of conducting busbars to be mounted. All this may be achieved without the need to change any other element apart from the points of union between the profiles (18) and (19) and this is carried out in an automatic manner without a fixed position within the assembly process.

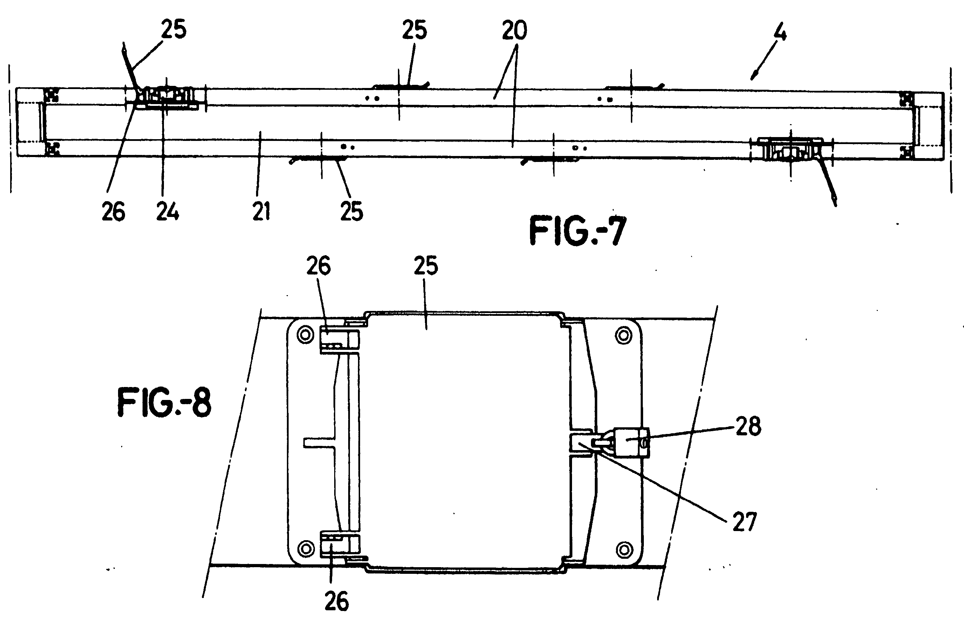

Figure 7 shows a conduit that has been obtained according to the structure of figure 6, with the possibility of making branch connections along the whole length and also on both faces. These branch connections are made through flaps (24), which automatically open and close with the accessories that have the corresponding branch connection boxes. These boxes are specially designed and are protected by other patents of the same applicant. The branch-connecting flap (24) has an additional cover (25) that protects the actual branch connection and allows it to be made when requested by an electricity distribution company. The actual conducting busbars possess indentations that are fitted with suitable shaped pieces that form the corresponding branch connection assembly. These pieces fit into the branch connection flaps (24) to allow the respective branch connection boxes to be located.

Thus, the branch connection flaps (24), together with their corresponding covers (25), are provided with hinges (26), so that the cover (25) will remain open once it has been opened, without preventing the location of the boxes. The cover (25) may be dismounted and removed once the branch connection has been made.

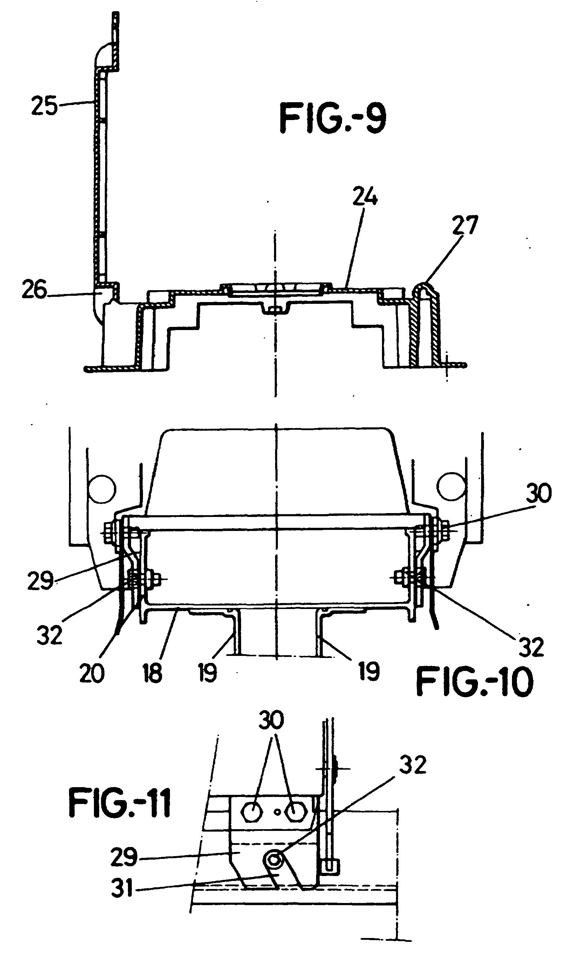

On the other hand, just as is shown in figures 8 and 9, the branch connection flap (24) has a fixed part (27) in the form of a bridge. This allows a lock (28) to be passed through the bridge (27) and the closed cover (25) to form a seal or security device so that the electricity supply company is able to prevent unauthorised connections.

Finally, as can be seen from figures 10 and 11, at regular intervals along the side of the channel in accordance with the length of the branch connection boxes, there are stops consisting of external parts (29) that are fixed with screws (30). These have a type of notch or channel (31) for housing other parts (32) transversal to the channel so that these parts (29) and (32) support the branch connection boxes. At the same time they free the branch connection clips from this function of mechanical support for the boxes. This means that part (32), located in channel (20), supports part (29), located in the box, in such a way that the branch connection exactly fits into the branch connection flap (24). This in turn facilitates the assembly and ensures that the branch connection box.is in its correct operating position.

It is not considered necessary to give a more extensive description, since any expert in the subject will understand the range of the invention and the advantages that it provides.

The materials, form, size and arrangement of the elements are subject to variation, always provided that this does not affect the essential idea of the invention.

The terms in which this description has been written, must always be taken in their broad and non-limiting sense.

## Claims

1. Bar grouping device to distribute and transport electricity which, being applicable in those types of structures wherein the conductor bars (1), both those which comprise the respective phases and those which comprise earth (2) and even neutral (3), are bundled and pressurized inside a hermetically-sealed tubular structure (4) and wherein upper and lower conduits (20) are established through which shunts can be made, wherein the bundle and corresponding pressure on the conductor bars is performed by means of a calibrated pressure screw (5) whereon pairs of conductor plates (11) are separately mounted determining spaces for the conductor bars the conductor plates being connected to insulating units (9,10) mounted on a bushing arranged on the calibrated pressure screw (5), all of this together with a pair of end plates (13) with an axial external segment (13') which passes through a pressure washer (14) complemented with another fixing washer (15), the pressure screw (5) being finished off at one of its ends in a head (6) with a neck (7) which breaks when the splice joint to the bundle is tightened and the optimum pressure point is reached, **characterized in that** it incorporates a safety system to prevent the conductor bar bundle splice joint from being re-tightened, said safety system being comprised of axial supports (17) withheld by the pressure washer (14), with the special characteristic that, on the far edge of the element, a safety washer (16) is arranged as an element to prevent the re-tightening of the splice joint once the calibrated torque has been attained when the neck (7) of the pressure screw head (6) breaks.

2. Bar grouping device to distribute and transport electricity, according to claim 1, **characterized in that** the insulating units (9,10) determine separating and distancing means of the conductor plates (11) to permit the mounting of one or more conductor bars (1) and/or a different thickness thereof, being possible, for example, to form a double-section neutral.

## Patentansprüche

1. Ein Stangen-Gruppiergerät zur Verteilung und Übertragung von Elektrizität, das in denjenigen Arten von Strukturen zur Anwendung kommt, in denen die Leiterstangen (1), sowohl diejenigen, die die entsprechenden Phasen enthalten, als auch diejenigen, die die Erdung (2) und sogar den Nullleiter (3) enthalten, innerhalb einer hermetisch abgeschlossenen röhrenförmigen Struktur (4) gebündelt sind und unter Druck stehen, und in denen obere und untere Kabelkanäle (20) vorgesehen sind, durch die Shunts angebracht werden können, worin die Bündelung und der entsprechende Druck auf die Leiterstangen mittels einer kalibrierten Druckschraube (5) ausgeführt wird, auf der Paare von Leiterplatten (11) separat montiert sind, die Zwischenräume für die Leiterstangen festlegen, wobei die Leiterplatten mit Isoliereinheiten (9,10) verbunden sind, die auf einer auf der kalibrierten Druckschraube (5) angeordneten Buchse befestigt sind, all dies zusammen mit einem Paar von Endplatten (13) mit einem axialen externen Segment (13'), das durch eine Druckscheibe (14) verläuft, die mit einer anderen Befestigungsscheibe (15) ergänzt ist, wobei die Druckschraube an dem einen Ende in einem Kopf (6) mit einem Stutzen (7) endet, der bricht, wenn die Verbindungsfuge zur Bündelung angezogen und der optimale Druckpunkt erreicht wird, **dadurch gekennzeichnet, dass** dieses ein Sicherheitssystem enthält, um ein erneutes Anziehen der Verbindungsfuge der Leiterstangenbündelung zu verhindern, das besagte Sicherheitssystem besteht aus axialen Trägern (17), die von der Druckscheibe (14) zurückgehalten werden, mit dem besonderen Merkmal, dass auf der entfernten Kante des Elements eine Sicherheitsscheibe (16) als Element angeordnet ist, um ein erneutes Anziehen der Verbindungsfuge zu verhindern, sobald das Kalibierdrehmoment erreicht wird wenn der Stutzen (7) des Druckschraubenkopfes (6) bricht.

2. Ein Stangen-Gruppiergerät zur Verteilung und Übertragung von Elektrizität gemäß Anspruch 1, **dadurch gekennzeichnet, dass** die Isoliereinheiten (9,10) Trenn- und Abstandsmittel der Leiterplatten (11) bestimmen, um die Montage einer oder mehrerer Leiterstangen (1) und/oder eine unterschiedliche Dicke derselben zu ermöglichen, so dass es zum Beispiel möglich ist, einen zweifach unterteilten Nullleiter zu bilden.

## Revendications

1. Dispositif de regroupement de barres pour distribuer et transporter l'électricité, qui étant applicable aux types de structures auxquelles les barres conductrices (1), aussi bien celles qui comprennent les phases respectives que celles qui comprennent la prise de terre (2) et même neutre (3), sont emballées et comprimées à l'intérieur d'une structure tubulaire fermée hermétiquement (4) et où sont établis des conduits supérieurs et inférieurs (20) à travers lesquels on peut réaliser des dérivations, dans lequel le faisceau et la pression correspondante sur les barres conductrices se fait par l'intermédiaire d'une vis de pression calibrée (5) sur laquelle sont montées, séparément, des paires de plaques conductrices (11) qui déterminent des espaces destinés aux barres conductrices, les plaques conductrices étant branchées à des unités isolantes (9, 10) montées sur une douille disposée sur la vis de pression calibrée (5) tout cela ajouté à une paire de plaques d'extrémités (13) avec un segment externe axial (13') qui passe au travers d'une rondelle de pression (14) complétée par une autre rondelle de fixation (15), la vis de pression (5) se terminant sur l'une de ses extrémités en une tête (6) avec un embout (7) qui se casse lorsque l'on appuie sur le joint du faisceau et on obtient le point de pression optimal, qui se **caractérise par le fait qu'**il incorpore un système de sécurité qui empêche que le joint du faisceau des barres conductrices ne soit appuyé à nouveau, le dit système de sécurité étant composé de supports axiaux (17) retenus par la rondelle de pression (14), et dont la particularité réside dans **le fait que**, sur le bord éloigné de l'élément, se trouve une rondelle de sécurité (16) comme élément qui empêche que l'on appuie à nouveau sur le joint une fois que l'on a obtenu la paire de torsion calibrée, lorsque l'on rompt l'embout (7) de la tête (6) de la vis de pression.

2. Dispositif de regroupement de barres pour distribuer et transporter l'électricité, selon la revendication 1, **caractérisé par le fait que** les unités isolantes (9, 10) déterminent des moyens de séparation et d'éloignement des plaques conductrices (11) afin de permettre le montage d'une ou de plusieurs barres conductrices (1) et/ou d'une épaisseur différente de celles-ci, rendant ainsi possible, par exemple, la formation d'un neutre à double section.
